# EUROPÄISCHE PATENTSCHRIFT

(11) **EP 2 369 191 B1**
(45) Veröffentlichungstag und Bekanntmachung des Hinweises auf die Patenterteilung: **07.08.2013**
(21) Anmeldenummer: 11157145.1
(22) Anmeldetag: 07.03.2011
(51) Int. Cl.: F16C 19/54, F16C 23/08, F16C 25/08, F16C 27/08, H02K 5/16, H02K 7/08, H02K 5/173

(54) **Lageranordnung mit zwei Pendelrollenlagern**
Bearing assembly with two spherical roller bearings
Agencement de stockage doté de deux roulements à rotule

(30) Priorität: 08.03.2010 AT 3622010
(43) Veröffentlichungstag der Anmeldung: 28.09.2011
(73) Patentinhaber: Bernecker+Rainer Industrie-Elektronik Gesellschaft MbH, 5142 Eggelsberg (AT)
(72) Erfinder: Bohatsch, Elmar, 5141, Moosdorf Hackenbuch (AT)
(74) Vertreter: Weiss, Christian

(56) Entgegenhaltungen:
- EP-A2- 0 916 862
- WO-A2-2010/022954
- DE-A1- 4 411 760
- US-A- 2 986 436
- US-A- 4 227 755

## Beschreibung

Lageranordnung mit zwei Pendelrollenlagern zum Lagern einer Motorwelle in einem Motorgehäuse, wobei ein Lagerring mit einer radialen Schulter vorgesehen ist und die Lagerinnenschalen der Pendelrollenlager einander zugewandt und axial an der radialen Schulter anliegend auf dem Lagerring angeordnet sind.

Bei Elektromotoranwendungen bei denen neben den üblichen Drehmomenten auch hohe Axialkräfte auftreten, z.B. bei Spindelmutterantrieben für Pressen, werden abtriebsseitig im Motor häufig Pendelrollenlager zur Lagerung der Motorwelle eingesetzt. Dabei werden zwei Pendelrollenlager axial hintereinander angeordnet, wobei die Lagerinnenschalen zueinander gerichtet angeordnet sind und mittels Schrauben gegeneinander verpresst werden. Dazu wird z.B. ein Abtriebsflansch, an dem die Last befestigt wird, stirnseitig mit der Abtriebswelle und an der Lageraußenschale anliegend verschraubt, womit gleichzeitig die beiden Pendelrollenlager verspannt werden. Dabei treten in der Praxis allerdings erhebliche Probleme auf. Einerseits werden die Lagerkanten der Lagerinnenschalen durch die hohen Axialkräfte (Last, Schraubverspannung) einer hohen Flächenpressung ausgesetzt. Aus geometrischen Gründen (genormte Lagerdimensionen) ist die verfügbare Lagerkante allerdings beschränkt und durch die Lagerbaureihe vorgegeben, sodass die mögliche Axialbelastung dadurch beschränkt wird. Aufgrund der geringen verfügbaren Fläche zur axialen Abstützung wirkt sich die hohe Schraubenvorspannung nachteilig aus, was dieses Problem noch verschärft. Aufgrund der notwendigen hohen Lagervorspannung erhöht sich darüber hinaus in nachteiliger Weise auch das Lagerlosbrechmoment der Lagerinnenringe (jenes Drehmoment, das benötigt wird, um das Lager vom Stillstand zu drehen). Die Lagerlosbrechmomente erhöhen sich auch mit steigender Temperatur (Materialausdehnung), was sich ebenfalls nachteilig auf den Anwendungsfall auswirkt. Diese Probleme führten in der Praxis zu häufigen Schraubenabrissen und damit verbundenen Beschädigungen und Stillstandszeiten des Antriebs. Andererseits kommt es durch das Anliegen des Abtriebsflansches an der Lageraußenschale und dem durch diese Anordnung bedingten axialen Spalt zwischen Abtriebsring und Welle auch zu einem Verkippen des Abtriebsflansches, was zu unerlaubten Schraubenbelastungen unter dem Schraubenkopf führt.

In einem Drehgelenk gemäß der US 6 637 969 B2 sind die Lageraußenschalen einander zugewandt in einer Außenhülse angeordnet und axial durch eine Schulter, an der beide Lageraußenschalen anliegen, getrennt. Die Lagerinnenschalen sind an einer Welle angeordnet. In einem solchen Drehlager sind sowohl Außenhülse, als auch Welle drehbar, wodurch die Lageranordnung einfach von beiden Seiten montiert werden kann. Eine solche Anordnung wäre in einem Elektromotor aber schwierig, da das Motorgehäuse starr angeordnet ist und die Montage der Pendelrollenlager nur sehr schwierig möglich wäre. Dazu müsste ein Lager umständlich durch das Motorgehäuse hindurch von der anderen Seite montiert werden.

Eine Lageranordnung mit Pendelrollenlagern ist z.B. auch aus der WO 2010/022954 A2 für einen Schiffsantrieb bekannt, wobei das aus zwei Pendelrollenlagern bestehende Axiallager am der Schiffsschraube abgewandten Ende der Propellerwelle angeordnet ist. Hier sind die zwei Pendelrollenlager auf einem mit einer radialen Schulter versehenen Lagerring angeordnet, wobei die Lagerinnenschalen einander zugewandt sind und sich an der Schulter abstützen. Bei solchen Lageranordnungen gibt es jedoch keinen Abtriebsflansch zum Befestigen einer Last.

Die US 2 986 436 A zeigt die Lagerung eines Elektromotors wobei die beiden verwendeten Schrägkugellager direkt auf dem verlängerten Rotor des Motors, am dem Abtrieb gegenüberliegenden axialen Ende der Motorwelle und nicht auf einem eigenen, eine radiale Schulter aufweisenden, Lagerring aufgesetzt sind. Die Abstützung erfolgt dabei über die Lagerkanten der Lagerinnenschalen. Dies birgt bei hohen Axialbelastungen das Problem von zu hoher Flächenpressung an den Lagerkanten, was die Axialbelastung beschränkt. Auch in diesem Fall ist kein Abtriebsflansch zum Befestigen einer Last vorgesehen.

Es ist nun eine Aufgabe der gegenständlichen Erfindung, eine Lageranordnung anzugeben, die einer hohen Axialbelastung ausgesetzt werden kann, die einfach montiert werden kann und die ein Verkippen des Abtriebsflansches reduziert.

Diese Aufgabe wird erfindungsgemäß dadurch gelöst, dass der Lagerring im betriebsgemäßen Einsatz der Lageranordnung über einen Abtriebsflansch, an dem eine anzutreibende Last befestigtbar ist, axial mit der Motorwelle verspannt ist, wobei sich eine Lageraußenschale eines Pendelrollenlagers axial gegen eine radiale Schulter des Motorgehäuses und sich die andere Lageraußenschale axiale gegen eine ortsfest angeordnete Feder abstützt. Durch diese Anordnung wird erreicht, dass die Lagerinnenschalen axial nicht mehr an den Lagerkanten der Lagerinnenschalen abgestützt werden, sondern an der freien Stirnseite der Lagerinnenschalen und damit erheblich mehr axiale Abstützfläche zur Verfügung steht. Damit kann die Flächenpressung reduziert werden bzw. können höhere axiale Lasten aufgenommen werden. Die axiale Kraft wird erfindungsgemäß über den Lagerring übertragen, der mit Abtriebsflansch und Motorwelle stirnseitig verspannt ist, womit ein Verkippen des Abtriebsflansches verringert wird. Darüber hinaus kann eine solche Anordnung einfach montiert werden.

Um die Losbrechmomente sicher übertragen zu können, sind die Lagerinnenschalen vorteilhaft auf den Lagerring aufgeschrumpft, um eine einfache kraftschlüssige Verbindung herzustellen.

Durch die feste Anordnung der ersten Lageraußenschale und axial verschiebbare Anordnung der zweiten Lageraußenschale wird auf einfache Weise erreicht, dass die Lagervorspannung durch die Feder auch bei Temperaturänderungen im Wesentlichen konstant gehalten wird.

Für einen konstruktiv einfachen Aufbau der Lageranordnung, die eine einfache Montage derselben ermöglicht, ist vorteilhaft ein lösbar mit dem Motorgehäuse verbundener Vorspannring vorgesehen, der eine erste Ausnehmung hat, in der die Feder angeordnet wird.

Wenn im Vorspannring eine zweite Ausnehmung vorgesehen ist, in der ein Dichtelement angeordnet wird, kann durch die Lageranordnung gleichzeitig eine Abdichtung zwischen dem geschmierten Lagerraum und dem Rotorraum des Motors hergestellt werden.

Bevorzugt wird der Lagerring im Elektromotor durch den Abtriebsflansch mittels einer Verschraubung axial mit der Motorwelle verspannt, was die Montage der Lageranordnung vereinfacht.

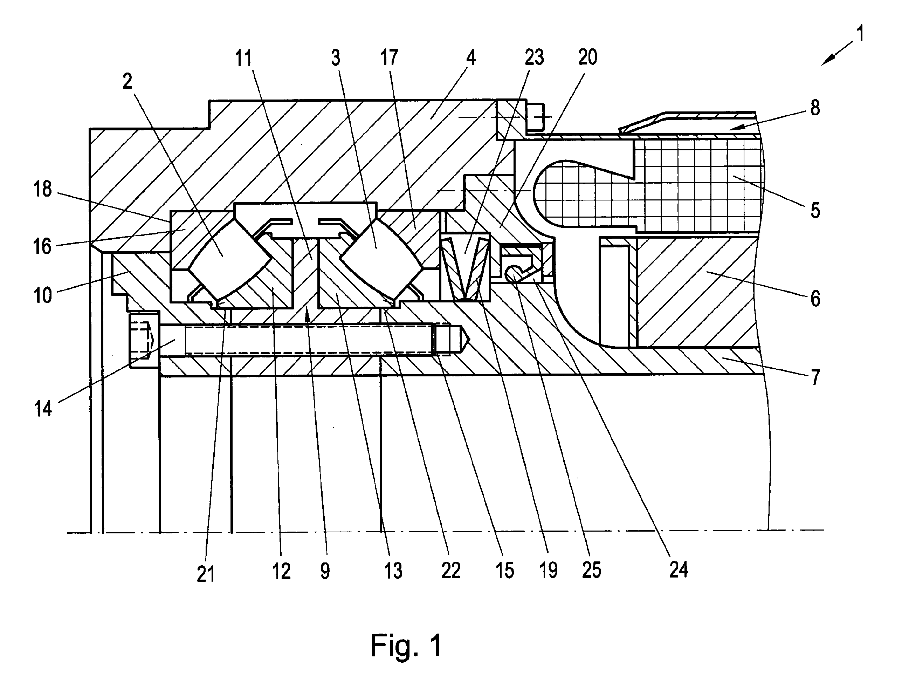

Die gegenständliche Erfindung wird nachfolgend unter Bezugnahme auf die schematische, ein vorteilhaftes Ausführungsbeispiel zeigende Figur 1 näher erläutert. Dabei zeigt
Fig.1 einen Ausschnitt eines Elektromotors mit der erfindungsgemäßen Lageranordnung.

Ein Elektromotor 1, wie in Fig.1 angedeutet, umfasst bekanntermaßen ein Motorgehäuse 8, in dem ein Stator 5 und ein auf einer Motorwelle 7 angeordneter Rotor 6 vorgesehen ist. Die Motorwelle 7 ist an beiden Seiten des Elektromotors 1 drehbar gelagert, wobei eine Lagerung (die hier dargestellte) die erfindungsgemäße Lageranordnung umfasst. Die andere Lagerung kann z.B. ein einfaches Loslager mit einem Kugelrollenlager sein. Abtriebsseitig ist im gezeigten Ausführungsbeispiel ein Abtriebsflansch 10 vorgesehen, an dem die anzutreibende Last, z.B. eine Antriebsspindel eines Spindelmutterantriebs einer Presse, befestigt wird.

Die erfindungsgemäße Lageranordnung besteht aus zwei Pendelrollenlagern 2, 3, die auf einem Lagerring 9 angeordnet sind, der eine radiale Schulter 11 aufweist. Die Lagerinnenschalen 12, 13 der Pendelrollenlager 2, 3 sind am Lagerring 9 kraftschlüssig angeordnet, wobei die Lagerinnenschalen 12, 13 einander zugewandt und axial an der Schulter 11 anliegend angeordnet sind. Die Schulter 11 ist dabei zumindest so hoch, dass die durch die Berührung hervorgerufene Flächenpressung zwischen Lagerinnenschalen 12, 13 und Schulter 11 im für den jeweiligen Anwendungsfall akzeptablen Bereich und auch der Lagerspezifikation entspricht. Bevorzugt wird die radiale Schulter 11 so hoch wie die radiale Höhe der Lagerinnenschalen 12, 13 gemacht, damit sich diese über deren gesamte radialen Höhe axial an der Schulter 11 abstützen können. Der Kraftschluss erfolgt vorzugweise durch eine geeignete Presspassung, wobei die Lagerinnenschalen 12, 13 auf den Lagerring 9 aufgeschrumpft werden können. Die Presspassung muss dabei zumindest so ausgelegt sein, dass die Lagerlosbrechmomente, typischerweise im Bereich von ca. 90Nm, übertragen werden können.

Der Lagerring 9 wird stirnseitig mit der Motorwelle 7 und dem Abtriebsflansch 10 verschraubt und dadurch axial verspannt. Dazu sind im Abtriebsflansch 10 und im Lagerring 9 über den Umfang verteilt Bohrungen vorgesehen, durch die Schrauben 14 gesteckt werden, die in Innengewinden 15 an der Motorwelle 7 geschraubt werden. Die Lagerkanten 21, 22 der Lagerinnenschalen 12, 13 sind dabei axial beabstandet vom Abtriebsflansch 10 und von der Motorwelle 7 angeordnet, sodass die Lagerinnenschalen 12, 13 durch die stirnseitige Verschraubung nicht verspannt werden.

Die Lageraußenschalen 16, 17 sind im Lagergehäuse 4, das Teil des Motorgehäuses 8 ist, angeordnet und gehalten. Die Lageraußenschale 16 des ersten Pendelrollenlagers 2, hier das axial außen liegende Lager, liegt dabei axial an einer Schulter 18 im Lagergehäuse 4 an und ist fest montiert, z.B. durch eine geeignete Press- oder Übergangspassung. Die zweite Lageraußenschale 17 ist axial verschiebbar, z.B. durch eine geeignete Spielpassung, und liegt axial an einer axial wirkenden Feder 19 an, die sich an einem feststehenden Vorspannring 20 abstützt, wobei der Vorspannring 20 ortsfest, aber lösbar mit dem Lagergehäuses 4 bzw. dem Motorgehäuse 8 verbunden ist. Der Vorspannring 20 hat eine erste Ausnehmung 23 zur Aufnahme der Feder 19 und eine zweite Ausnehmung 24 zur Aufnahme eines Dichtelements 25 aufweist, das zur Abdichtung zwischen der geschmierten Lagerung und dem Rotorraum an der Motorwelle 7 anliegt. Der Vorspannring 20 ist hier z.B. mit dem Lagergehäuse 4 verschraubt, wie in Fig. 1 angedeutet.

Die Feder 19 dient zum Vorspannen der Lageranordnung, indem die Lageranordnung mit der axial verschiebbaren Motorwelle 7 gegen die radiale Schulter 18 des Lagergehäuses gedrückt wird, und der thermischen Kompensation durch Aufnahme der betriebsbedingten thermischen Ausdehnung der Pendelrollenlager 2, 3. Durch die axial verschiebbare Lageraußenschale 17 wird die Lagervorspannung bei Temperaturänderung konstant gehalten.

Zur Montage der Lageranordnung sind die Lagerinnenschalen 12, 13 auf dem Lagerring 9 anzuordnen, z.B. aufzuschrumpfen, und danach kann die erste Lageraußenschale 16, der Lagerring 9 und die zweite Lageraußenschale 17 im Lagergehäuse 4 der Reihe nach eingefügt werden. Danach kann die Feder 19 im Vorspannring 20 angeordnet werden. Das restliche Motorgehäuse 8 mit Motorwelle 7 wird dann hineingeschoben und axial mit dem Abtriebsflansch 10 verschraubt. Die Lageranordnung kann daher auch einfach vormontiert werden und anschließen mit dem Motorgehäuse 8 verbunden werden.

## Patentansprüche

1. Lageranordnung mit zwei Pendelrollenlagern (2, 3) zum Lagern einer Motorwelle (7) in einem Motorgehäuse (8), wobei ein Lagerring (9) mit einer radialen Schulter (11) vorgesehen ist und die Lagerinnenschalen (12, 13) der Pendelrollenlager (2, 3) einander zugewandt und axial an der radialen Schuler (11) anliegend auf dem Lagerring (9) angeordnet sind, **dadurch gekennzeichnet, dass** der Lagerring (9) im betriebsgemäßen Einsatz der Lageranordnung über einen Abtriebsflansch (10), an dem eine anzutreibende Last befestigtbar ist, axial mit der Motorwelle (7) verspannt ist, wobei sich eine erste Lageraußenschale (16) eines Pendelrollenlagers (2) axial gegen eine radiale Schulter (18) des Motorgehäuses (8) und sich die zweite Lageraußenschale (17) axial gegen eine ortsfest angeordnete Feder (19) abstützt.

2. Lageranordnung nach Anspruch 1, **dadurch gekennzeichnet, dass** die Lagerinnenschalen (12, 13) auf den Lagerring (9) aufgeschrumpft sind.

3. Lageranordnung nach Anspruch 1 oder 2, **dadurch gekennzeichnet, dass** die erste Lageraußenschale (16) fest und die zweite Lageraußenschale (17) axial verschiebbar im Motorgehäuse (8) angeordnet ist.

4. Lageranordnung nach einem der Ansprüche 1 bis 3, **dadurch gekennzeichnet, dass** ein Vorspannring (20) mit einer ersten Ausnehmung (23) vorgesehen ist, in der die Feder (19) angeordnet ist und der Vorspannring (20) lösbar mit dem Motorgehäuse (8) verbunden ist.

5. Lageranordnung nach Anspruch 4, **dadurch gekennzeichnet, dass** im Vorspannring (20) eine zweite Ausnehmung (24) vorgesehen ist, in der ein Dichtelement (25) angeordnet ist.

6. Elektromotor mit einer Motorwelle (7), die an einer Seite mit einer Lageranordnung nach einem der Ansprüche 1 bis 5 gelagert ist.

7. Elektromotor nach Anspruch 6, **dadurch gekennzeichnet, dass** ein Abtriebsflansch (10) vorgesehen ist, der den Lagerring (9) mittels einer Verschraubung axial mit der Motorwelle (7) verspannt.

## Claims

1. Bearing arrangement with two spherical roller bearings (2, 3) for mounting a motor shaft (7) in a motor housing (8), wherein a bearing ring (9) is provided with a radial shoulder (11) and the inner bearing shells (12, 13) of the spherical roller bearings (2, 3) are disposed on the bearing ring (9) so as to face one another and to lie axially against the radial shoulder (11), **characterized in that** the bearing ring, in proper use of the bearing arrangement as intended, is braced axially against the motor shaft (7) by way of a power take-off flange (10) onto which a load to be driven can be fastened, wherein a first outer bearing shell (16) of a spherical roller bearing (2) supports itself axially against a radial shoulder (18) of the motor housing (8) and the second outer bearing shell (17) supports itself axially against a spring (19) that is fixed in place.

2. Bearing arrangement according to claim 1, **characterized in that** the inner bearing shell (12, 13) is shrunk onto the bearing ring (9).

3. Bearing arrangement according to claim 1 or 2, **characterized in that** the first outer bearing shell (16) is disposed in the motor housing (8) in fixed manner, and the second outer bearing shell (17) is disposed in axially displaceable manner.

4. Bearing arrangement according to one of claims 1 to 3, **characterized in that** a bias ring (20) with a first recess (23) is provided, in which recess the spring (19) is disposed, and that the bias ring (20) is releasably connected with the motor housing (8).

5. Bearing arrangement according to claim 4, **characterized in that** a second recess (24) is provided in the bias ring (20), in which recess a sealing element (25) is disposed.

6. Electric motor with a motor shaft (7) that is mounted on one side with a bearing arrangement according to one of claims 1 to 5.

7. Electric motor according to claim 6, **characterized in that** a power take-off flange (10) is provided, which braces the bearing ring (9) axially against the motor shaft (7), by means of a screw connection.

## Revendications

1. Structure de roulement comprenant deux roulements à rouleaux en forme de tonneau (2, 3), servant à tourillonner un arbre de moteur (7) dans une carcasse de moteur (8), dans laquelle une bague de roulement (9) est munie d'un épaulement radial (11) et les coquilles intérieures (12, 13) des roulements à rouleaux en forme de tonneau (2, 3) sont dirigées l'une vers l'autre et sont disposées sur la bague de roulement (9) en appui axial contre l'épaulement radial (11), **caractérisée par le fait que**, dans l'utilisation normale de la structure de roulement, la bague de roulement (9) est serrée axialement contre l'arbre de moteur (7) par l'intermédiaire d'un flasque de sortie (10), auquel une charge à entraîner peut être fixée, une première coquille extérieure de roulement (16) d'un roulement à rouleaux en forme de tonneau (2) s'appuyant axialement contre un épaulement radial (18) de la carcasse de moteur (8) et la deuxième coquille extérieure de roulement (17) s'appuyant axialement contre un ressort (19) placé en position fixe.

2. Structure de roulement selon la revendication 1, **caractérisée par le fait que** les coquilles intérieures de roulement (12, 13) sont montées sur la bague de roulement (9) par frettage.

3. Structure de roulement selon la revendication 1 ou 2, **caractérisée par le fait que** la première coquille extérieure de roulement (16) est montée en position fixe et la deuxième coquille extérieure de roulement (17) est montée mobile en translation axiale dans la carcasse de moteur (8).

4. Structure de roulement selon l'une des revendications 1 à 3, **caractérisée par le fait qu'**elle comporte une bague de précontrainte (20) présentant un premier évidement (23) dans lequel le ressort (19) est placé et la bague de précontrainte (20) est assemblée à la carcasse de moteur (8) de façon démontable.

5. Structure de roulement selon la revendication 4, **caractérisée par le fait que**, dans la bague de précontrainte (20), est formé un deuxième évidement (24) dans lequel est placé un élément d'étanchéité (25).

6. Moteur électrique possédant un arbre de moteur (7) qui est tourillonné d'un côté au moyen d'une structure de roulement selon l'une des revendications 1 à 5.

7. Moteur électrique selon la revendication 6, **caractérisé par le fait qu'**il comporte un flasque de sortie (10) qui serre axialement la bague de roulement (9) contre l'arbre de moteur (7) avec précontrainte au moyen d'un assemblage à vis.
